Europäisches Patentamt

(19) European Patent Office

Office européen des brevets

(11) Publication number: **0 053 781**

**B1**

(12) **EUROPEAN PATENT SPECIFICATION**

(45) Date of publication of patent specification: **23.10.85**

(21) Application number: **81110013.0**

(22) Date of filing: **30.11.81**

(51) Int. Cl.⁴: **A 22 C 9/00,** A 23 B 4/00, B 01 F 11/00

(54) Meat processor and process for treating meat.

(30) Priority: **05.12.80 US 213555**
**05.12.80 US 213554**

(43) Date of publication of application:
**16.06.82 Bulletin 82/24**

(45) Publication of the grant of the patent:
**23.10.85 Bulletin 85/43**

(84) Designated Contracting States:
**BE DE FR GB IT NL SE**

(56) References cited:
**EP-A-0 006 728**
**WO-A-81/03109**
**CH-A- 203 375**
**DE-A-2 056 048**
**DE-A-2 619 948**
**FR-A-2 307 572**
**GB-A-1 264 431**
**US-A-2 610 041**
**US-A-3 977 876**
**US-A-4 036 122**

(73) Proprietor: **Hubbard, Raymond W.**
**1746 W. Longview Avenue**
**Stockton California 95201 (US)**
(73) Proprietor: **Seiffhart, John B.**
**867 Kramer Drive**
**Lodi California 94240 (US)**
(73) Proprietor: **Hubbard, Thomas W.**
**3641 West Michigan**
**Stockton, Cal. 95204 (US)**

(72) Inventor: **Hubbard, Raymond W.**
**1746 W. Longview Avenue**
**Stockton California 95201 (US)**
Inventor: **Seiffhart, John B.**
**867 Kramer Drive**
**Lodi California 94240 (US)**
Inventor: **Hubbard, Thomas W.**
**3641 West Michigan**
**Stockton, Cal. 95204 (US)**

(74) Representative: **Reinländer & Bernhardt**
**Patentanwälte**
**Orthstrasse 12**
**D-8000 München 60 (DE)**

Courier Press, Leamington Spa, England.

## Description

The present invention relates to an apparatus and a process for treating meat according to the preamble of claims 1 and 10, respectively.

US—A—4 036 122 shows an apparatus for treating meat comprising a drum with an interior cavity having a substantially rectangular vertical cross-section, said drum being arranged to rotate about an axis perpendicular to the plane of its rectangular cross-section which also means perpendicular to its longitudinal axis. The interior cavity of said drum is partly filled with meat pieces being brought into a tumbling movement in such a manner that massaging forces are exerted on the meat by the action of gravity. The tumbling movement causes pins or the like to enter into the meat pieces, thus substantially preventing any movement of the meat pieces other than dropping. The interior cavity of the drum is held under a vacuum during said movement.

Generally it has been known for several years that if the myosin and other proteins found in meat can be brought to the surface of the meat, the adhesive qualities of the proteins will bind individual meat pieces during cooking into a solid whole piece of meat. This improves the appearance of the meat for presentation to the market. There have been many machines designed to release the myosin proteins by abrading or cutting the surfaces of the meat, and these machines extract the proteins in a relatively short period of time. However, they are very crude and have a destructive effect on the meat and its resulting appearance. They also reduce the meat's capability of absorbing injected pickle or retaining its juices. These prior art machines are also often dangerous to operate and require considerable hand labor in processing the individual meat pieces through the machines.

Another method of extracting myosin proteins from cured meats, such as ham, involves tumbling the meat in large rotatable drums, called tumblers. The drum is usually provided with internal radially projecting baffles or paddles affixed longitudinally to the internal wall and sometimes to the end of the drum. The drum is then rotated on its cylindrical axis which is disposed during rotation at an angle somewhere between horizontal and substantially less than vertical. During rotation, the internal baffles move those portions of the meat which are at the bottom of the drum out from under the stack of meat. They lift the meat up the side of the drum then drop it back into the mass of meat. The action is very much like a powered cement mixer.

While this latter tumbling process is effective, and can be used for large quantities of meat without hand processing, it is a very slow process and may take from six to eighteen hours with the machinery of the prior art to effect the proper myosin release. In addition, the internal baffles tear and cut the pieces of meat, which are pulled out from under the stack, and all of the pieces of meat are repeatedly subjected to this tearing because of the long treatment time. The result is that this type of tumbler can only be used where the appearance of the meat pieces is not important in the final product. Delicate meat pieces, such as bone-in hams, poultry, water-added boneless hams, and other water-added products cannot be tumbled in these large drums successfully. The tumbling process destroys the appearance and unity of the pieces of meat thereby adversely effecting the yield and quality of the products.

Even for those types of meat which can be tumbled in the prior art machines, the action is very slow, and a large number of tumblers are required to process a large volume of meat which thus results in a large capital outlay for a processing line and higher prices for the end product.

It is known that tumbling process time can be reduced by placing the meat under a vacuum while it is being tumbled. Thus, some of the tumblers on the market are sealed to permit a vacuum to be established in the container so the meat is tumbled in a partial vacuum. The problems of the tearing of the meat and of lower yields are not solved by such machines, however.

It is the object of the present invention to improve the above mentioned apparatus and method respectively in such a way that the time necessary for treating the meat is greatly reduced, without cutting or tearing the individual meat pieces in order to keep them whole and their appearance intact.

This object is solved by the features of the characterizing parts of claims 1 and 10 respectively.

Special embodiments of the present invention are characterized in the respective subclaims.

The present invention has been found to greatly reduce the processing time for extracting myosin and other proteins to the surface of the meat from the six to eighteen hours of the prior art to times of less than an hour. This time savings results in a tremendous increase in production volume per machine which effects a savings in capital outlay and results in reduced prices of the end product. This time savings is achieved by simultaneously tumbling the meat, with a different motion or action than has been predominately used by the prior art, and shaking the meat.

In the present invention, as a result of the unique tumbling motion, all of the meat in the drum is also subjected to large pressure changes which greatly reduce the processing time as the drum is rotated. All of the meat rolls over and moves from the top of the pile of meat to the bottom while being shook but without tearing or pulling. Each piece of meat is mashed and crushed by this action rather than being torn out from under the pile by baffles and lifted and dropped on top of the pile. The effect is to massage the meat rather than to tear, batter, and abuse it. Thus, because the present invention does not tear or cut meat pieces, even delicate pieces of meat that previously could not be quickly processed, or could not be processed at all by the prior art machinery, can now be tumbled for extraction of myosin proteins.

It appears that the combined massaging and shaking action of the present invention on the meat causes greater absorption and retention of the protein juices, brine, pickle, or additives in the meat which results in a more nutritious product as well as a higher yield. This means that soluble proteins which would otherwise drain out of the meat with lost pickle can be more completely retained. In addition, shaking the meat under a refrigerated vacuum while tumbling it contributes to a further reduction in the processing time. It is believed that the combination of massage tumbling and the simultaneous shaking action produces the enhanced processing effects of the present invention.

The invention will now be explained in the following description with reference to the drawing. In the drawing:

Figure 1 is a perspective view of the apparatus of the present invention; and

Figure 2 is a perspective view of an insert for the drum thereof.

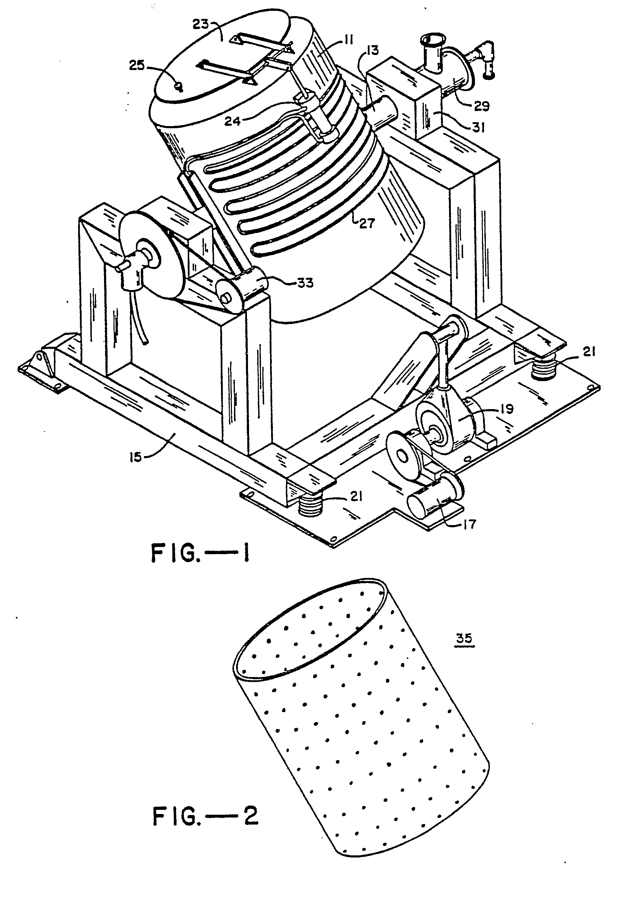

In the apparatus of the present invention, a drum 11 is provided which is arranged to rotate about an axis 13 perpendicular to its longitudinal axis. The drum could of course be of equal length and width and depth so that there is no one axis longer than any other and any axis could be the longitudinal axis. The drum can be any configuration but a cylindrical shape is preferred for ease of manufacture and cost effectiveness. The reason the most efficient action appears to be obtained from rotating the drum perpendicular to its longitudinal axis is that this orientation creates the largest distance for the meat to fall during rotation and accordingly, the greatest massaging pressures on the meat in the drum.

The drum 11 is preferably smooth walled internally so that it does not catch or tear the meat in any way. The drum is preferably operated at about three-fourths full so that when the meat slides from end to end as the drum rotates, it also tumbles over the other pieces and each piece changes position from the top of the pile to the bottom due to the tumbling action. The action alternately mashes the meat piece and then relieves the pressure on each meat piece being rolled over internally in the drum. As the meat piece moves from the top of the pile of meat to the bottom the meat is continually cycled from a low pressure environment at the top to a high pressure constriction under the load of meat.

The drum 11 rotates fairly slowly with a preferred rotation rate of between one (1) and twenty-five (25) rpm. The large size drums, which are considered optimum at the present time, have approximately a 907.2 kg (2000 pounds) capacity when three-quarters full. Between five (5) and sixteen (16) rpm seems to be the optimum rotation rate within the preferred speed range.

Means are provided for shaking the drum while it rotates. This is done by supporting the drum on a frame 15 and having the frame arranged so that at least part of it can be reciprocated in a cycle for a predetermined distance and at a rate which will effect the means for shaking the drum. In the present invention, the frame is arranged to pivot at one end about a horizontal axis so that the other end can be moved up and down. A means 19 is provided for reciprocating the movable end of the frame up and down through a variable distance of between 0.635 and 5.08 cm (¼ and 2 inches) at a controllable rate with the range between 1.27 and 3.81 cm (½ and 1½ inches) apparently the optimum. This is done by a motor 17 which is connected to the movable portion of the frame through an adjustable throw crank shaft 19. This mechanical arrangement causes rythmic shaking to occur. Springs 21 are mounted under the movable end of the frame to help support the weight of the drum 11 and to reduce the power requirements necessary to effect the shaking. Variable pressure airbags can be used to assist the springs to compensate for different weight loads in the tumbler. The rate of shaking of the drum, which seems to be most effective, is between 25 and 800 cycles per minute with the most effective shaking for most meats occurring in the cycle range of 100 to 300 cycles per minute. The rate varies with different types of meat. More delicate meats have to be tumbled and shook slower.

A means is provided for evacuating the unoccupied interior space of the drum 11 after it has been filled to its operating volume with the meat to be processed. This is most easily done by making the cover 23, which is removable or openable, air-tight. Because of the elevated location of the cover when the tumbler is upright, the opening and closing of the cover can be actuated by an air cylinder 24.

A vacuum connection 25 is mounted to the drum 11 to permit a vacuum to be pulled on the drum after the drum has been filled to its operating capacity with meat. This effects the evacuation of most of the air from the unoccupied interior space of the drum. For ease of manufacture, the vacuum connection is made integral to the cover 23 of the drum.

A means is also provided for refrigerating the meat being processed while it is in the drum 11. This is done by providing refrigerating coils 27 which are secured to the drum. The coils are fed through rotatable connections 29 which are standard items. These rotatable connections are integral to the rotatable journals 31 mounted on the frame 15 and supporting the drum. Refrigerating the meat retards bacterial growth, counteracts heat buildup from the interaction of the meat pieces, and stimulates extraction of the myosin or other proteins.

A motor 33 is provided for rotating the drum 11. In the preferred embodiment, both the drum drive motor 33, for rotating the drum, and the crank shaft drive motor 17, for shaking the drum, are variable speed hydraulic drive. The variable speed can be controlled by an operator during operation.

The process of the present invention is most beneficially utilized on meats which have been pickled and are to be cured and cooked or smoked or frozen. After the meat pieces have been injected with pickle, the usual process is to allow them to stand approximately twelve (12) hours to permit the pickle to be absorbed into the meat tissue.

Allowing meat to stand after it has been injected with pickle makes it relatively stiff due to advanced rigor mortis. This stiffness makes the meat more difficult to process, and it therefore takes the prior art tumblers longer to raise the myosin proteins because of the stiff rigor mortis condition.

If the meat pieces are processed by the cutting, macerating, or tumbling processes of the prior art before being allowed to stand the full twelve hours, the tearing of the meat causes it to lose a portion of the pickle and meat juices which results in lower quality and product yield.

The process of the present invention permits pickeled meat to be processed much sooner after the pickel has been injected because the process of the invention is much less destructive of the fluid retention capability of the meat so that it does not lose pickle and meat juices. The process actually treats the meat to enhance its fluid retention capacity while activating the protein release mechanism in the meat.

Although the main characteristic of the process of the present invention is the unique combined tumbling and shaking action described herein, the process of the present invention may also include a prior processing step which greatly enhances fluid retention and the myosin extraction process. However, this step can only be utilized on the less delicate meat products where the appearance of the product is unimportant or the effects are not visible in the final product. The prestep includes passing the meat pieces through a mashing and puncturing device which crushes the meat under a roller to make it pliable and to burst and rupture the internal cells of the meat pieces. The mashing action of the roller breaks down the rigor mortis of the meat as well as causing greater absorption and retention of the injected pickle internally of the meat while at the same time producing an increased release of myosin proteins from those internal cells for extraction to the surface.

The masher used for the prestep includes a roller having sharp radial projections formed on it. When the meat is run under the roller, the roller punctures and crushes and mashes the meat against a spring loaded plate which evenly distributes the pressure of the roller on the meat irrespective of the varying thicknesses of the pieces of meat. Other methods of mashing, such as by passing the meat between a pair of opposed rollers may also be effective.

In the preferred embodiment of the process of the present invention, the meat is fed through the masher with the smooth external surface of the meat held intact by the pressure plate while the internal exposed surface of the piece of meat, created by the removal of the bone, is crushed by the projections of the roller. These projections are intended to puncture the surface of the meat and crush and mash the internal fiber and cells.

The pieces of meat are preferably subjected to successive steps of less severe mashing rather than one heavy step. This less severe mashing can be accomplished by placing two machines in tandem with a lighter pressure setting on the pressure plate and then simply running the meat through the two machines successively. It is believed this prestep makes the meat pliable by breaking up the rigor mortis, distributes the injected pickle evenly throughout the meat, and releases the myosin within the meat so that the main step of the process is more effective and takes less time to accomplish its objective of bringing the myosin proteins to the surface of the meat.

After mashing, the pieces of the meat are placed in the large meat processing tumblers of the invention which are described above. The action of these tumblers is to cause the meat to tumble over itself and cycle from a top portion of the mass of meat in the drum to a bottom portion of the mass. The meat is simultaneously shaken.

The combined effect of this tumbling and shaking action is to massage the meat and increase the absorption and retention of the pickel for higher quality in firmness and color and higher yield weights while at the same time causing the myosin proteins to be released and extracted to the surface of the meat. The myosin extraction time is drastically reduced from hours to minutes and free pickle in the drum is absorbed into the meat.

When the appearance of the meat is not important, a removable insert or liner 35 is provided for the drum 11 which includes means for working the meat processed in the drum to further increase the rate of protein extraction. In a preferred embodiment, the means for working the meat includes a roughened surface inside the liner which abrades the meat to release the proteins. Sharp internal projections formed in the insert such as by punching through from the outside has proved effective and least expensive to form. The insert is used only where the appearance of the meat is unimportant, such as for a sectioned and formed product, but where reduced processing time is most important.

The combined action of shaking and tumble massage in the manner of the present invention has been shown to decrease the time necesary to bring the myosin proteins to the surface of the meat from the six to eighteen hours of the prior art machines to less than an hour and to a matter of minutes when combined with refrigerating the meat and working under a vacuum in the tumbler.

The use of the drum insert 35 can further reduce the processing time when the appearance of the meat is unimportant to the final product.

Similarly, process time savings and increased fluid retention and protein extraction can be achieved for less delicate meats by the prestep of passing the meat pieces through a mashing and puncturing device which first makes the meat pliable, distributes the pickel evenly throughout the meat and releases the proteins within the meat.

This decrease in processing time also decreases by a direct proportion the number of machines necessary for a desired production rate. Therefore it is obvious that the improvements provided by the present invention are extremely important to the meat processing industry and will have significant economic impact in the savings for meat processors.

The shaker-tumbler of the present invention also makes it possible to treat delicate meats for protein extraction and enhanced fluid retention without adversely affecting the appearance of the final product.

Additionally it has been found that the process of the present invention increases the absorption and retention of fluid and additives by the meat. While it is not known why or how it occurs, it has been found that pickle and meat juices which have drained out of the meat after the pickle injection, and which contain valuable proteins, are reabsorbed back into the meat during tumbling and shaking is they are added to the tumbler along with the meat before processing. The result is a more nutritious end product, and the process saves for the consumer valuable proteins which would otherwise be lost.

It will be seen from the foregoing description of the present invention that it will accomplish all of the objectives and advantages attributable thereto. While the processor and process of the present invention have been described in considerable detail, they are not to be limited to such details except as may be necessitated by the appended claims.

**Claims**

1. Apparatus for treating meat, in particular a quantity of meat pieces to raise proteins to the surface of the meat and increase fluid and additive absorption comprising a drum (11) with an interior cavity for receiving the meat, if desired together with additives and fluids, and preferably held under a vacuum, said drum (11) being arranged to rotate about an axis (13) perpendicular to its longitudinal axis, characterized in that the drum (11) is rotatable at a rate between one and twenty-five rpm and in that means (19) are provided for shaking said drum (11) at a rate between 25 and 800 cycles per minute, preferably between 25 and 500 cycles per minute.

2. Apparatus according to claim 1, characterized in that the drum (11) is mounted on a frame (15) supporting said drum (11), said frame being arranged so that at least a part of it can be reciprocated in a cycle at the shaking rate.

3. Apparatus according to claim 2 characterized in that said frame (15) is arranged to pivot at one end so that the other end can be moved generally up and down a predetermined distance which is variable between 6,3 mm and 50,8 mm, preferably 12,7 mm and 38,1 mm.

4. Apparatus according to any one of claims 1 to 3, characterized in that said shaking means comprises a motor driven adjustable throw crank shaft (19) connected to a movable portion of said frame (15).

5. Apparatus according to any one of claims 1 to 4, characterized by spring means (21) and variable pressure airbags mounted under the movable end of the frame to assist the up and down cycling of said frame (15) and of said drum (11).

6. Apparatus according to any one of claims 1 to 5, characterized by a removable insert (35) for said drum (11), said insert including means for working said meat to increase the rate of myosin extraction therefrom.

7. Apparatus according to any one of claim 1 to 6, characterized by means (25) for evacuating air from the unoccupied interior space of said drum (11) after it has been filled to its operating volume with meat to be processed.

8. Apparatus to any one of claims 1 to 7, characterized by means (27) for refrigerating the meat to be treated while it is in the drum (11).

9. Apparatus according to claim 8, characterized in that the refrigerating means comprises refrigerating coils (27) secured to said drum (11), said coils being fed through rotatable connections (29) integral to rotatable journals (31) mounted on said frame (15) supporting said drum (11).

10. Process for treating a quantity of meat pieces to raise proteins to the surface of the meat comprising introducing the meat, if desired together with additives and fluid and preferably held under a vacuum, into a container, and tumbling said container by rotating it about an axis perpendicular to its longitudinal axis which causes the meat to tumble over itself characterized in that by the combination of this tumbling movement and of a limited filling of the container, in which nothing restricts the tumbling movement of the meat, the pieces of meat in a pile thereof are cycled from a top portion of the mass to a bottom portion without pulling them from the bottom of the mass with a cement mixer action, and additionally and simultaneously the container and thereby the meat in it is shook whereby the meat pieces are alternately compressed and relieved while being shook.

11. Process according to claim 10 characterized by pre-treating the meat pieces to cause the proteins in the meat to be released and to break up the rigor mortis stiffness of the meat before shaking and tumbling the pieces.

12. Process according to claim 11, characterized in that in the pretreatment of the meat the meat is subjected to a mashing, crushing, or puncturing action.

13. Process according to any one of claims 10 to 12 characterized in that the meat is also refrigerated while it is being tumbled and shook.

14. Process according to any one of claims 10 to 13, characterized in that the meat is tumbled and shook in a relatively smooth walled container.

15. Process of any one of claims 10 to 14, characterized in that the container and the meat in it is tumbled at a rate between one and twenty-five, preferably at rate between five and sixteen revolutions per minute.

16. Process of any one of claims 10 to 15 characterized in that the meat is shook at a rate of between twenty-five and eight hundred, preferably between twenty-five and five hundred cycles per minute.

17. Process of claims 11 or 12 characterized in that the meat is first pre-treated by mashing and crushing it between a roller having radial projections on its outer surface and a pressure plate.

18. Process according to claim 17, characterized in that the meat is tumbled in a container having means for additionally working the meat to more quickly raise the myosin to the surface of the meat.

**Revendications**

1. Machine pour le traitement de la viande, en particulier, pour traiter une quantité de morceaux de viande de manière à faire remonter les protéines à la surface de la viande et à accroître l'absorption de fluides et additifs, comprenant un tambour (11) présentant une cavité intérieure destinée à recevoir la viande, éventuellement avec des additifs et du fluide, et qui est de préférence maintenue sous vide, ledit tambour (11) étant agencé pour tourner autour d'un axe (13) perpendiculaire à son axe longitudinal, caractérisée en ce que le tambour (11) peut être mis en rotation à une vitesse d'entre en et vingt-cinq tr/mn et en ce que des moyens (19) sont prévus pour secouer le tambour (11) à une cadence comprise entre 25 et 800 cycles par minute, de préférence entre 25 et 500 cycles par minute.

2. Machine selon la revendication 1, caractérisée en ce que le tambour (11) est monté sur un bâti (15) qui supporte ledit tambour (11), ledit bâti étant agencé de manière qu'au moins une partie de ce bâti puisse être animée d'un mouvement alternatif cyclique à la cadence du secouage.

3. Machine selon la revendication 2, caractérisée en ce que ledit bâti (15) est agencé pour pivoter à une extrémité de manière que l'autre extrémité puisse être déplacée sensiblement vers le haut et vers le base sur une distance prédéterminée qui varie entre 6,3 mm et 50,8 mm, de préférence entre 12,7 mm et 38,1 mm.

4. Machine selon l'une quelconque des revendication 1 à 3, caractérisée en ce que lesdits moyens de secouage comprennent un arbre manivelle (19) entraîné au moteur et à course réglable, qui est relié à une partie mobile dudit châssis (15).

5. Machine selon l'une quelconque des revendications 1 à 4, caractérisée par des moyens à ressort (21) et des soufflets pneumatiques à pression variable montés sous l'extrémité mobile du bâti pour assister le mouvement cyclique montant et descendant dudit bâti (15) et dudit tambour (11).

6. Machine selon l'une quelconque des revendications 1 à 5, caractérisée par une garniture amovible (35) prévue pour ledit tambour (11), ladite garniture comprenant des moyens servant à travailler ladite viande pour accroître le degré d'extraction de la myosine de cette viande.

7. Machine selon l'une quelconque des revendications 1 à 6, caractérisée par des moyens (25) servant à évacuer l'air de l'espace intérieur non occupé dudit tambour (11) après qui celui-ci a été rempli de viande à traiter jusqu'à son volume travaillant.

8. Machine selon l'une quelconque des revendications 1 à 7, caractérisée par des moyens (27) servant à réfrigérer la viande à traiter pendant qu'elle se trouve dans le tambour (11).

9. Machine selon la revendication 8, caractérisée en ce que les moyens de réfrigération comprennent des serpentins de réfrigération (27) fixés audit tambour (11), lesdits serpentins étant alimentés par l'intermédiaire de raccords rotatifs (29) qui sont d'une seule pièce avec des tourillons rotatifs (21) montés sur ledit bâti (15) qui supporte ledit tambour (11).

10. Procédé pour traiter une quantité de morceaux de viande afin de faire remonter les protéines à la surface de la viande, consistant à introduire la viande, éventuellement avec des additifs et du fluide, et de préférence maintenue sous vide, dans un récipient, et à retourner ledit récipient en la faisant tourner autour de l'axe perpendiculaire à son axe longitudinal, ce qui a pour effet de retourner la viande sur elle-même, caractérisé par la combinaison de ce mouvement de retournement et d'un remplissage limité du récipient, dans lequel rien ne restreint le mouvement de retournement de la viande, les morceaux de viande contenus dans un tas de morceaux sont amenés cycliquement d'une partie supérieure de la masse à une partie inférieure sans qu'ils ne soient tirés d'au-dessous de la masse avec une action de malaxeur à béton et, en supplément et en même temps, le récipient et, par conséquent, la viande qui y est contenue, sont secoués, de sorte que le morceaux de viande sont alternativement comprimés et détendus pendant qu'ils sont secoués.

11. Procédé selon la revendication 10, caractérisé en ce qu'on prétraite les morceaux de viande pour provoquer la libération des protéines contenues dans la viande et supprimer la rigidité de rigor mortis de la viande avant le secouage et le retournement des morceaux.

12. Procédé selon la revendication 1, caractérisé en ce que, dans le prétraitement de la viande, on soumet la viande à une action de compression, d'aplatissement ou de piquage.

13. Procédé selon l'une quelconque des revendications 10 à 12, caractérisé en ce que la viande est également réfrigérée pendant qu'elle est retournée et secouée.

14. Procédé selon l'une quelconque des revendications 10 à 13, caractérisé en ce que la viande est retournée et secouée dans un récipient à paroi relativement lisse.

15. Procédé selon l'une quelconque des revendications 10 à 14, caractérisé en ce que le récipient et la viande contenue dans ce récipient sont retournés à une cadence comprise entre un et vingt-cinq, de préférence, entre cinq et seize tours par minute.

16. Procédé selon l'une quelconque des revendications 10 à 15, caractérisé en ce que la viande est secouée à une cadence comprise entre vingt-cinq et huit cents, de préférence entre vingt-cinq et cinq cents cycles par minute.

17. Procédé selon la revendication 11 ou 12, caractérisé en ce que la viande est tout d'abord prétraitée par compression et aplatissement entre un rouleau possédant des saillies radiales sur sa surface externe et une plaque de pression.

18. Procédé selon la revendication 17, caractérisé en ce que la viande est retournée dans un récipient possédant des moyens pour travailler additionellement la viande de façon à faire remonter rapidement la myosine à la surface de la viande.

**Patentansprüche**

1. Vorrichtung zum Behandeln von Fleich, insbesondere einer Menge von Fleischstücken, um Proteine zur Oberfläche des Fleisches emporzuheben und die Absorption von Flüssigkeiten und Zusätzen zur erhöhen, bestehend aus einer Trommel (11) mit einem Innenraum zur Aufnahme des Fleisches, gewünschtenfalls zusammen mit Zusätzen und Flüssigkeit, die vorzugsweise unter Unterdruck gehalten wird, wobei die Trommel (11) so angeordnet ist, daß sie um eine Achse (13) senkrecht zu ihrer Längsachse rotiert, dadurch gekennzeichnet, daß die Trommel (11) mit einer Rate zwischen einer und fünfundzwanzig UpM drehbar ist und daß Mittel (19) vorgesehen sind, um die Trommel (11) mit einer Rate zwischen 25 und 800 Zyklen pro Minute zu schütteln, vorzugsweise zwischen 25 und 500 Zyklen pro Minute.

2. Vorrichtung nach Anspruch 1, dadurch gekennzeichnet, daß die Trommel (11) auf ein Gestell (15) montiert ist, das die Trommel (11) abstützt, wobei das Gestell so angeordnet ist, daß wenigstens ein Teil desselben in einem Zyklus mit der Schüttelrate hin und her bewegt werden kann.

3. Vorrichtung nach Anspruch 2, dadurch gekennzeichnet, daß das Gestell (15) so angeordnet ist, daß es an einem Ende schwenkt, derart, daß das andere Ende eine vorgegebene Distanz, die zwischen 6,3 mm und 50,8 mm, vorzugweise zwischen 12,7 und 38,1 mm variabel ist, allgemein auf und ab bewegt werden kann.

4. Vorrichtung nach irgendeinem der Ansprüche 1 bis 3, dadurch gekennzeichnet, daß die Schütteleinrichtung aus einer mit einem Motor angetriebenen Kurbelwelle (19) mit einstellbarem Hub besteht, die mit einem bewegbaren Teil des Gestells (15) verbunden ist.

5. Vorrichtung nach irgendeinem der Ansprüche 1 bis 4, gekennzeichnet durch Federmittel (21) und Luftsäcke mit variablem Druck, die unter das bewegbare Ende des Gestells montiert sind, um die zyklische Auf- und Abbewegung des Gestells (15) und der Trommel (11) zu unterstützen.

6. Vorrichtung nach irgendeinem der Ansprüche 1 bis 5, gekennzeichnet durch eine herausnehmbaren Einsatz (35) für die Trommel (11), der Mittel zum Bearbeiten des Fleisches aufweist, um die Rate der Myosin-Extraktion zu erhöhen.

7. Vorrichtung nach irgendeinem der Ansprüche 1 bis 6, gekennzeichnet durch Einrichtungen (25) zum Absaugen von Luft aus dem unbesetzten Innenraum der Trommel (11) nach dem diese mit zu behandelndem Fleisch bis zum Betriebsvolumen gefüllt worden ist.

8. Vorrichtung nach irgendeinem der Ansprüche 1 bis 7, gekennzeichnet durch Mittel (27) zum Kühlen des zu behandelnden Fleisches, während es sich in der Trommel (11) befindet.

9. Vorrichtung nach Anspruch 8, dadurch gekennzeichnet, daß die Kühlmittel aus Kühlschlangen (27) bestehen, die an der Trommel (11) befestigt sind, wobei die Schlangen durch drehbare Anschlüsse (29) gespeist werden, die mit drehbaren Lagern (31) einstückig sind, die auf das die Trommel (11) tragende Gestell (15) montiert sind.

10. Verfahren zum Behandeln einer Menge von Fleischstücken, um Proteine zur Oberfläche des Fleisches anzuheben, bei dem das Fleisch, gewünschtenfalls zusammen mit Zusätzen und Flüssigkeit und vorzugsweise unter Unterdruck gehalten, in einen Behälter eingeführt wird, und der Behälter dadurch einer Heraumwerfbewegung unterworfen wird, daß er um eine zu seiner Längsachse senkrechte Achse gedreht wird, so daß dafür gesorgt wird, daß das Fleisch durcheinander geworfen wird, dadurch gekennzeichnet, daß durch die Kombination dieser Durcheinanderwerfbewegung und einer begrenzten Fülung des Behälters, in dem nichts die Durcheinanderwerfbewegung des Fleisches behindert, die Fleischstücke in einem daraus bestehenden Haufen vom oberen Teil einer Masse zum unteren Teil sich zyklisch bewegen, ohne daß sie vom Boden der Masse mit einer Zementmischerwirkung herausgezogen werden, und zusätzlich und gleichzeitig der Behälter und damit das Fleisch darin geschüttelt werden, so daß die Fleischstücke alternierend zusammengedrückt und freigegeben werden, während sie geschüttelt werden.

11. Verfahren nach Anspruch 10, gekennzeichnet durch eine Vorbehandlung der Fleischstücke, um zu bewirken, daß die Proteine im Fleisch freigegeben werden und die Totenstarre des Fleisches aufgebrochen wird, ehe die Stücke geschüttelt und durcheinandergeworfen werden.

12. Verfahren nach Anspruch 11, dadurch gekennzeichnet, daß bei der Vorbehandlung des Fleisches das Fleisch einer Druck-, Quetsch- oder Punktier-Behandlung unterworfen wird.

13. Verfahren nach irgendeinem der Ansprüche 10 bis 12, dadurch gekennzeichnet, daß das Fleisch auch gekühlt wird, während es durcheinandergeworfen und geschüttelt wird.

14. Verfahren nach irgendeinem der Ansprüche 10 bis 13, dadurch gekennzeichnet, daß das Fleisch in einem relativ glattwandigen Behälter durcheinandergeworfen und geschüttelt wird.

15. Verfahren nach irgendeinem der Ansprüche 10 bis 14, dadurch gekennzeichnet, daß der Behälter und das Fleisch in ihm mit einer Rate zwischen einer und fünfundzwanzig, vorzugsweise mit einer Rate zwischen fünf und sechzehn Umdrehungen pro Minute durcheinandergeworfen wird.

16. Verfahren nach irgendeinem der Ansprüche 10 bis 15, dadurch gekennzeichnet, daß das Fleisch mit einer Rate zwischen fünfundzwanzig und achthundert, vorzugsweise zwischen fünfundzwanzig und fünfhundert Zyklen pro Minute geschüttelt wird.

17. Verfahren nach Ansprüchen 11 oder 12, dadurch gekennzeichnet, daß das Fleisch zunächst dadurch vorgehandelt wird, daß es zwischen einer Walze mit radialen Vorsprüngen auf der Außenfläche und einer Druckplatte durch Drücken und Quetschen vorbehandelt wird.

18. Verfahren nach Anspruch 17, dadurch gekennzeichnet, daß das Fleisch in einem Behälter durcheinandergeworfen wird, der Mittel aufweist, um das Fleisch zusätzlich zu bearbeiten, um das Myosin schneller zu Oberfläche des Fleisches anzuheben.

FIG.—1

FIG.—2

1